# EUROPEAN PATENT APPLICATION

(11) **EP 2 194 663 A2**
(43) Date of publication of application: **09.06.2010**
(21) Application number: 09177733.4
(22) Date of filing: 02.12.2009
(51) Int. Cl.: H04B 7/15

(54) **Radio relay device and method**

(30) Priority: 02.12.2008 JP 2008307904
(71) Applicant: FUJITSU LIMITED, Kawasaki-shi, Kanagawa 211-8588 (JP)
(72) Inventor: Seki, Hiroyuki, Kawasaki-shi, Kanagawa 211-8588 (JP)
(74) Representative: Stebbing, Timothy Charles

(57) **Abstract**

A radio relay method for relaying and transmitting a received radio signal, including receiving the radio signal as a first received signal through a first antenna (121), outputting a first gain controlled signal which controls gain of the first received signal, transmitting a first relay signal which amplifies the first gain controlled signal, receiving the radio signal as a second received signal through a second antenna (122), outputting a second gain controlled signal which controls gain of the second received signal, transmitting a second relay signal which amplifies the second gain controlled signal. The relay method further includes generating a first wait which is used to remove self interference from the first received signal, based on the first and second gain controlled signals and the first input signal used to control the gain, and removing the self interference from the first received signal based on the first wait.

## Description

The present invention relates to a radio relay device and a radio relay method that relays a radio signal by a plurality of communication methods.

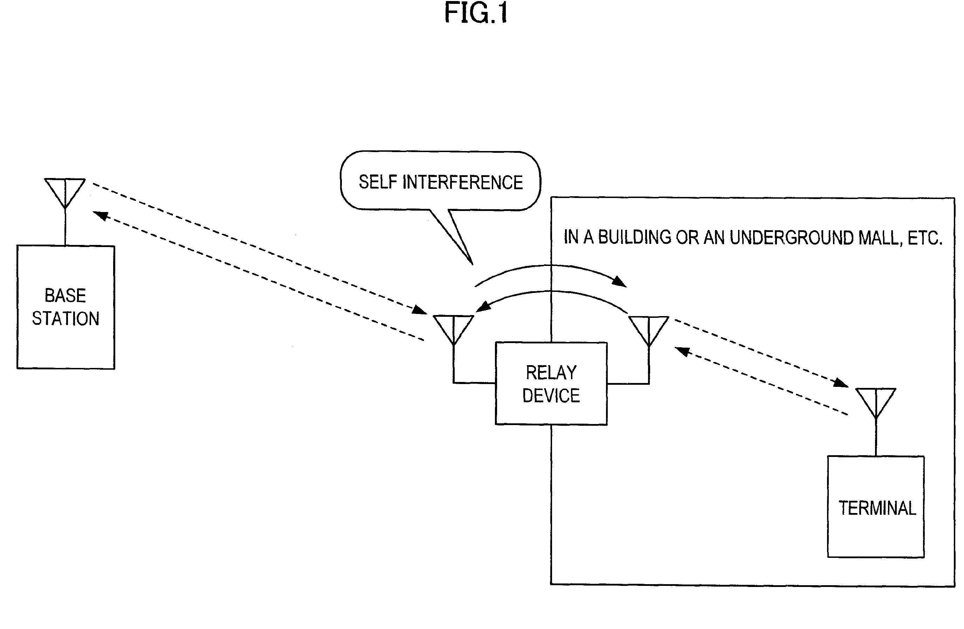

FIG.1 is a diagram illustrating an example of a usage form of a radio relay device.

The radio relay device relays by amplifying and transmitting a radio wave received from a radio base station to an area that is far from the radio base station or an area whose reception intensity of radio waves is extremely low, such as in a building or an underground mall. In a cellular mobile communication, as illustrated in FIG.1, when the radio relay device relays between a radio base station and a terminal, the radio relay device performs the two way relay in a case of receiving a signal from the radio base station and transmitting the signal to the terminal and in a case of receiving a signal from the terminal and transmitting the signal to the radio base station.

An important issue is how to prevent oscillation that occurs when the signal, amplified and transmitted by the radio relay device, is received by a receiving antenna of the radio relay device itself. To prevent the oscillation, isolation between a transmitting antenna and a receiving antenna of the radio relay device is enlarged. For example, a distance is provided between the transmitting antenna and the receiving antenna of the radio relay device, a blocking object is provided between the transmitting antenna and the receiving antenna, or directivity and polarized waves of the transmitting antenna and the receiving antenna are adjusted.

However, the radio waves loop to the receiving antenna from the transmitting antenna by reflection, diffraction, or penetration according to an environment. Therefore, it is common that not only the isolation between the transmitting antenna and the receiving antenna is physically secured, but also a self interference (sometimes referred as "loop interference") removal technique is used to remove interference signal looping into the receiving antenna from the transmitting antenna. For example, if a relay gain of the radio relay device is 70dB, it is preferable to secure 80dB or more of reduction of the self interference as the total of the isolation between the transmitting antenna and the receiving antenna and a suppression performance of the self interference to secure 10 dB or more as a Signal to Noise Ratio (S/N ratio) of the signal to be relayed.

As described above, the isolation between the transmitting antenna and the receiving antenna and the self interference removal technique are very important in the radio relay device. Especially, if self interference removal performance is high, it is possible to ease a limit of the isolation between the transmitting antenna and the receiving antenna. Therefore, the restriction of an installation of the radio relay device is reduced, so that the radio relay device is easily provided.

There is a known method of self interference removal in, for example, Itoh Kazuhito, et al, "A Booster using Adaptive Interference Canceller for Pager System," Technical report of IEICE. RCS, the Institute of Electronics, Information and Communication Engineers, August 1999, RCS99-78.

The above-described method has a configuration in which the signal, which is obtained by multiplying the transmission signal by the self interference removal wait, is cancelled from the received signal, and uses the adaptive algorithm to calculate the self interference removal wait in such a way that the signal power after the cancellation becomes the minimum.

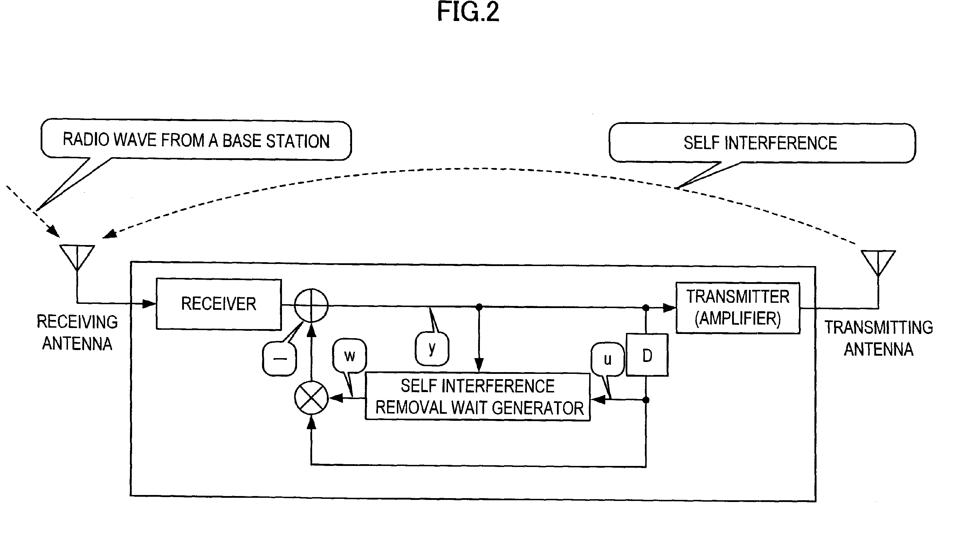

FIG.2 is a diagram illustrating a configuration example of a conventional radio relay device.

The radio relay device illustrated in FIG.2 uses a method of removing the self interference by using the adaptive algorithm. A signal that is obtained by combining the signal from the radio base station and the self interference signal is input to the receiving antenna. A receiver performs processes, such as detecting of a required band by a filter, converting into a baseband signal by a downconverter, adjusting a signal level by Auto Gain Control (AGC), and converting into a digital signal by an Analog to Digital (A/D) converter. In a transmitter, the digital signal is again converted into an analog baseband signal by the D/A converter. The analog baseband signal is converted into a Radio Frequency (RF) signal by an upconverter and is then amplified by an amplifier. Then the RF signal is transmitted from the transmitting antenna.

In a self interference removal wait generator, a signal after the self interference cancel and a signal that delayed the transmission signal correspondingly to the self interference are received. By using a Least Mean Square (LSM) algorithm, the self interference removal wait generator generates a self interference removal wait W that minimizes the signal power after the self interference cancel. The value obtained by multiplying the signal that delayed the transmission signal to the self interference removal wait W is subtracted from the reception signal. The result after subtraction is a signal after the self interference cancel. The signal after the self interference cancel is a transmission signal.

In a next-generation mobile communication system, a communication method called Multiple Input Multiple Output (MIMO) is used to perform high-speed data communication. In the MIMO communication method, a plurality of independent data channels are transmitted by using a plurality of transmitting antennas at the same time and by using the same frequency. In a receiving side, a MIMO channel is formed by using a plurality of receiving antennas, so that the plurality of data channels may be demodulated separately.

Furthermore, since broadband transmission is performed in the next generation mobile communication system, a higher carrier frequency is used. The higher the frequency, the larger the distance attenuation. Thus, an area where the waves hardly reach is expected to be increased. Therefore, the need of the radio relay device is increased for the next-generation mobile communication system. Based on the above-described background, since a MIMO signal is relayed in the next-generation mobile communication system, a technique for achieving the high-speed data communication in a wide area is required.

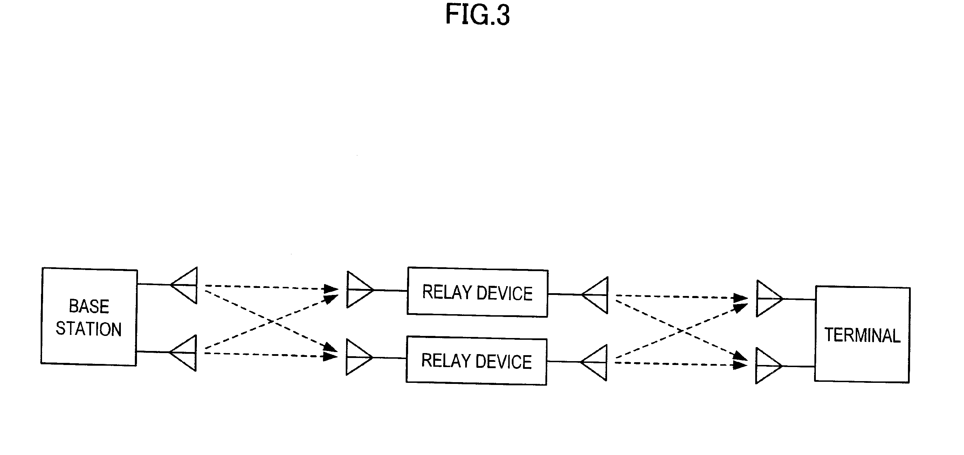

FIG.3 is a diagram illustrating an example of a MIMO communication system.

To relay the MIMO signal, the system of a single radio relay device system using one transmitting antenna and one receiving antenna is deficient. To relay the MIMO signal, a plurality of relays are performed as illustrated in FIG.3. In the MIMO relay system illustrated in FIG.3, a radio base station has two transmitting antennas, and a terminal has two receiving antennas. In the example of FIG.3, the radio relay of two systems is performed. This enables the relay of the independent MIMO channel

FIG.3 illustrates the relay of a downlink from the radio base station to the terminal. When MIMO transmission is performed on an uplink to the radio base station from the terminal, a plurality of relays are performed. To simplify description, only the radio relay of either the downlink or the uplink is described as an example.

FIG.4 is a diagram illustrating an example of a self interference in the radio relay device.

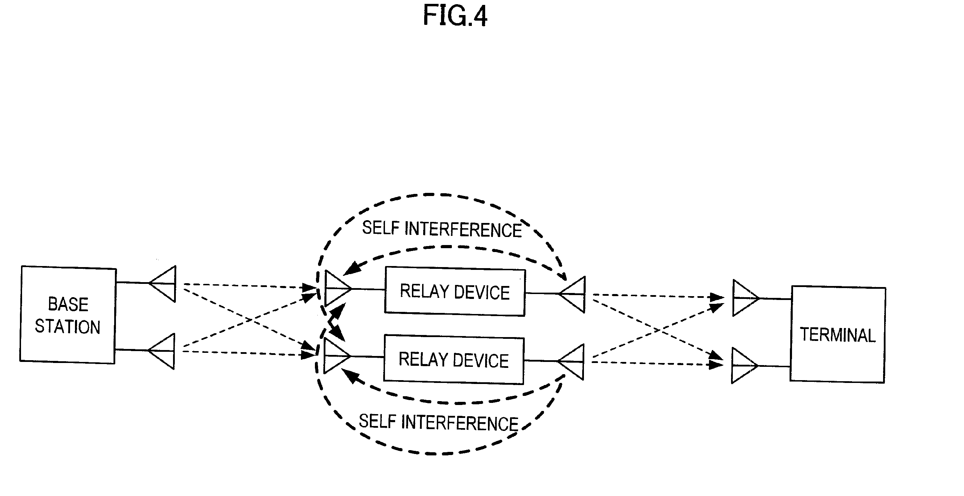

As described in FIG.4, a plurality of self interferences is generated in the MIMO replay. To relay the plurality of signals independent from the transmitting antenna at the same time, the receiving antenna of the radio relay device receives a plurality of independence self interferences from the plurality of transmitting antennas. If two systems of the conventional relay device illustrated in FIG.2 are aligned, only the self interference from one transmitting antenna may be removed. In the self interference removal wait generator, if the transmission signals from the two transmitting antennas are input, interference caused by the two independent self interferences are required to be removed based on the two dependent input signals. This makes it difficult to calculate the self interference removal wait. If the optimum self interference wait is not calculated without convergence of the wait calculation by the adaptive algorithm, the removal performance of the self interference is deteriorated, so that sufficient relay gain may not be secured.

There is a method for allocating an antenna having a polarized wave characteristic for each relay system to reduce influence of the self interference in the MIMO relay (see, for example, Japanese Laid-Open Patent Publication No. 2005-192185). Furthermore, to reduce the influence of the self interference, there is a method for adjusting a directionality pattern of the antenna, so that the gain to the receiving antenna from the transmitting antenna is small (see, for example, Japanese Laid-Open Patent Publication No.2006-20211).

As described above, the self interferences increase in the MIMO relay, so that the relay gain may not be increased. Therefore, if generation of the self interference in the MIMO relay is suppressed, the relay gain may be increased.

In this case, a radio relay device collectively relays a band where a plurality of communication systems is present. For example, in Long Term Evolution (LTE), a next-generation mobile communication system which has been standardized by Third Generation Partnership Project (3GPP), it is determined that the frequency allocated to the third generation mobile communication system (3G system) that is served at present is used.

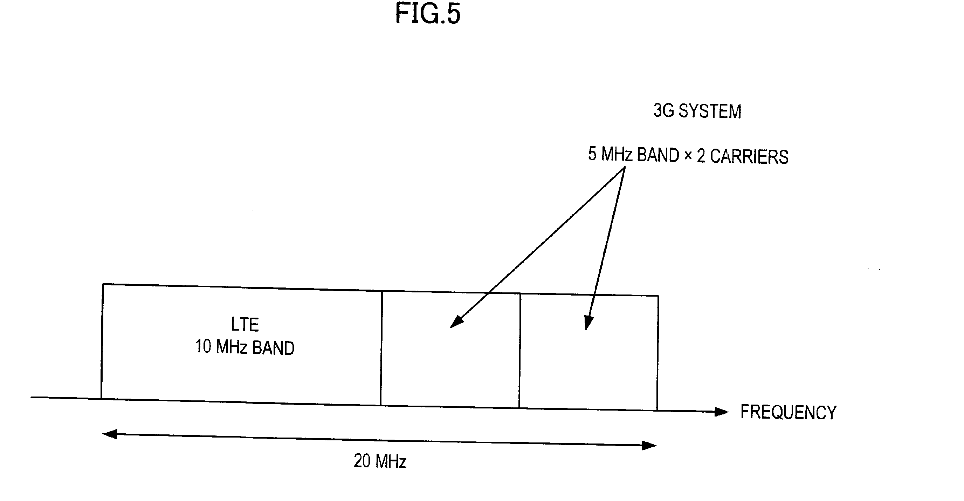

FIG.5 is a diagram illustrating an example of allocation of a frequency band.

As illustrated in FIG.5, in a transitional stage of the service, 10 MHz of the 20 MHz frequency band for the 3G system may be allocated to the LTE, and 10 MHz may be allocated to the 3G system (5 MHz band x 2 carriers). On the other hand, in the radio relay device, a configuration for relaying 20 MHz band at once is preferable regardless of how 20 MHz band is used. However, in the downlink of the LTE, the MIMO transmission is determined to be performed, and the terminal devices in most categories correspond to the MIMO transmission of the downlink. In this case, since the radio relay device is also desired to correspond to the MIMO relay, the above-described increase of the self interference is an issue.

To collectively relay the frequency band where the LTE that corresponds to the MIMO and the 3G system that does not correspond to the MIMO are present together, the radio relay device is required to perform the MIMO relay according to the LTE corresponding to the MIMO. Accordingly, even in the 3G system that does not correspond to the MIMO, the self interferences are increased. The mix rate of the LTE and the 3G system may be changed according to spread of the terminal corresponding to the LTE and service demand such as transmission speed. The change of the configuration of the radio relay device according to a change of the bandwidth mixture ratio of LTE and the 3G system may be a maintenance problem of the radio relay device.

It is desirable to reduce the influence of the self interference in a radio relay device that relays a radio signal by a plurality of communication methods.

According to an aspect of the invention, a radio relay method for relaying and transmitting a received radio signal, including receiving the radio signal as a first received signal through a first antenna, outputting a first gain controlled signal which controls gain of the first received signal, and transmitting a first relay signal which is obtained by amplifying the first gain controlled signal is provided. The method further including receiving the radio signal as a second received signal through a second antenna, outputting a second gain controlled signal which controls gain of the second received signal, and transmitting a second relay signal which is obtained by amplifying the second gain controlled signal. The method further including generating a first wait which is used to subtract the self interference from the first received signal based on the first and second gain controlled signals and the first input signal used to control the gain, subtracting the self interference from the first received signal based on the first wait, generating a second wait which is used to subtract the self interference from the second received signal which includes the self interference based on the first and second gain controlled signals and the second input signal used to control the gain, and subtracting the self interference from the second received signal based on the second wait.

The advantages of the invention will be realized and attained by means of the elements and combinations particularly pointed out in the claims.

It is to be understood that both the foregoing general description and the following detailed description are exemplary and explanatory and are not restrictive of the invention as claimed.
Embodiments of the invention will now be described with reference to the accompanying drawings, of which:

FIG.1 illustrates an example of a usage form of a radio relay device,

FIG.2 illustrates a configuration example of a conventional radio relay device,

FIG.3 illustrates an example of a MIMO communication system,

FIG.4 illustrates an example of a self interference in a radio relay device,

FIG.5 illustrates an example of allocation of frequency bands,

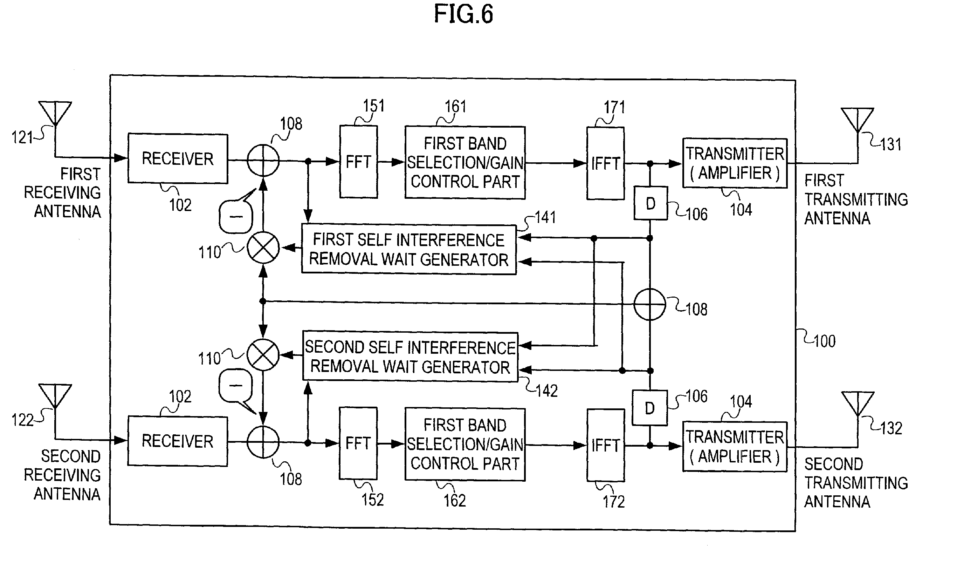

FIG.6 illustrates a first embodiment of a radio relay device,

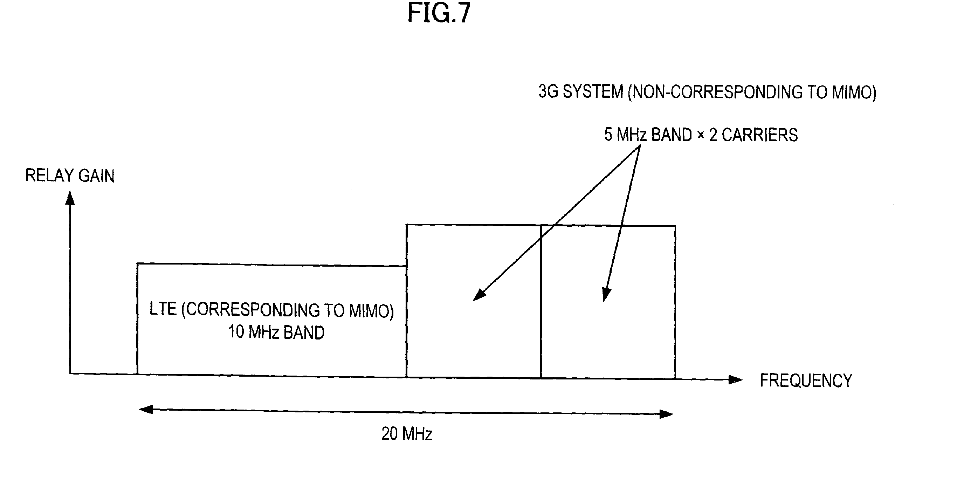

FIG.7 illustrates an example of band selection/gain adjustment by a first band selection/gain control part of a first relay system,

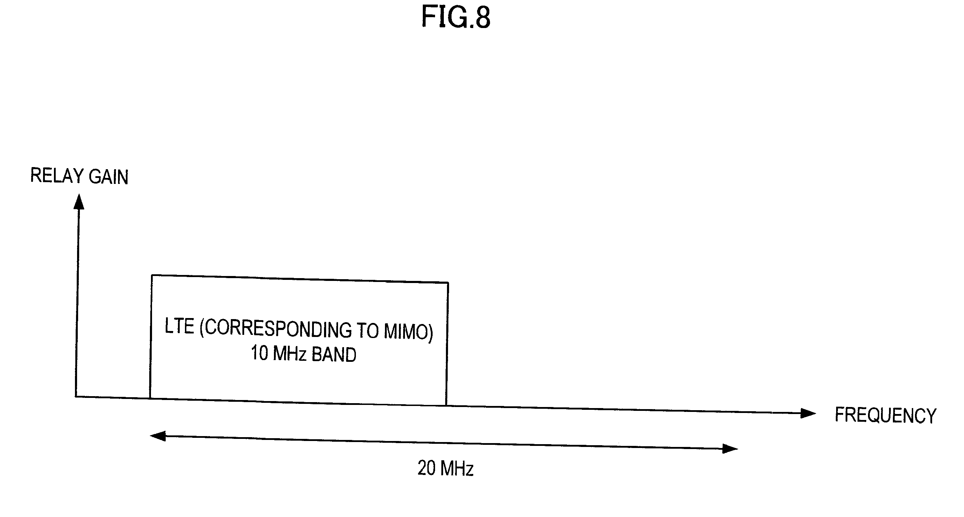

FIG.8 illustrates an example of band selection/gain adjustment by a second band selection/gain control part of a second relay system,

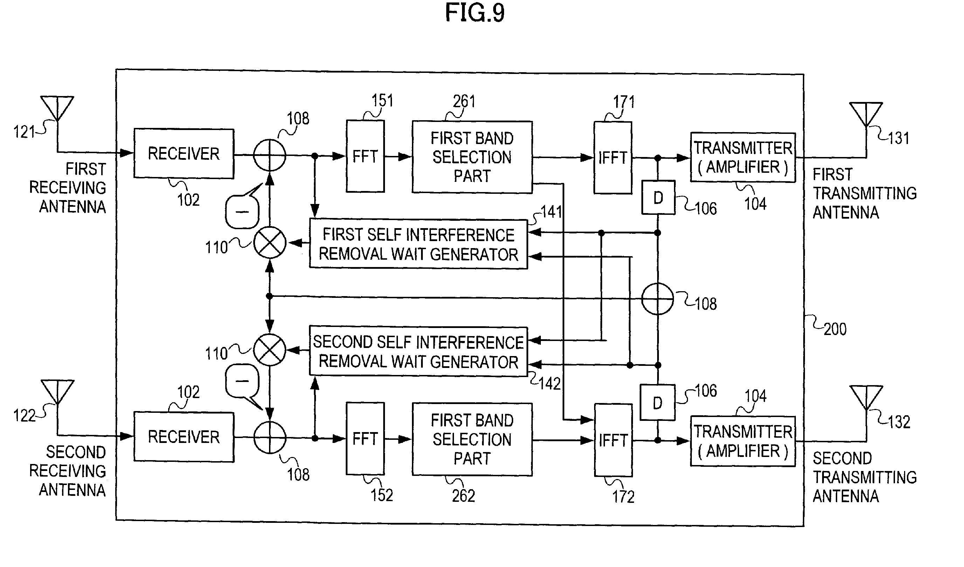

FIG.9 illustrates a second embodiment of a radio relay device,

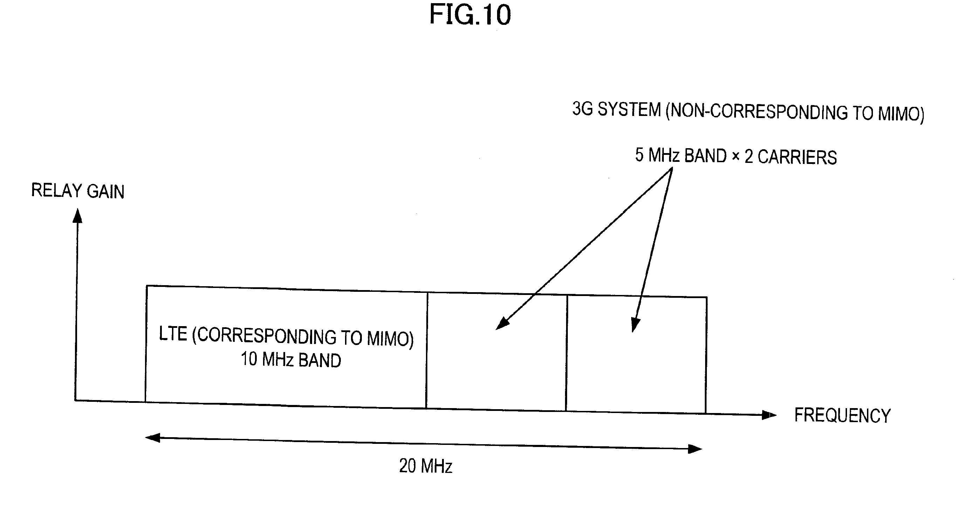

FIG.10 illustrates an example of band selection by the first band selection part of the first relay system,

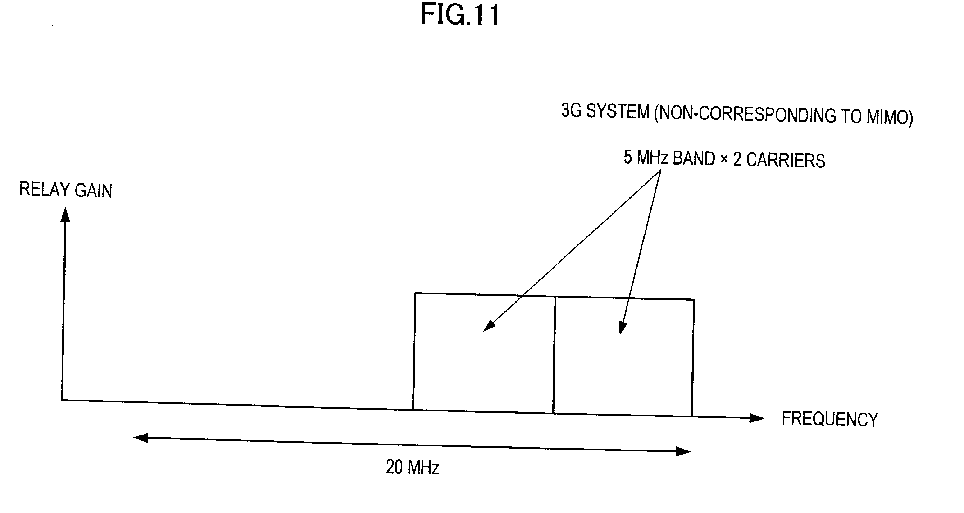

FIG.11 illustrates an example of a band input to an IFFT part of the second relay system from the first band selection part of the first relay system,

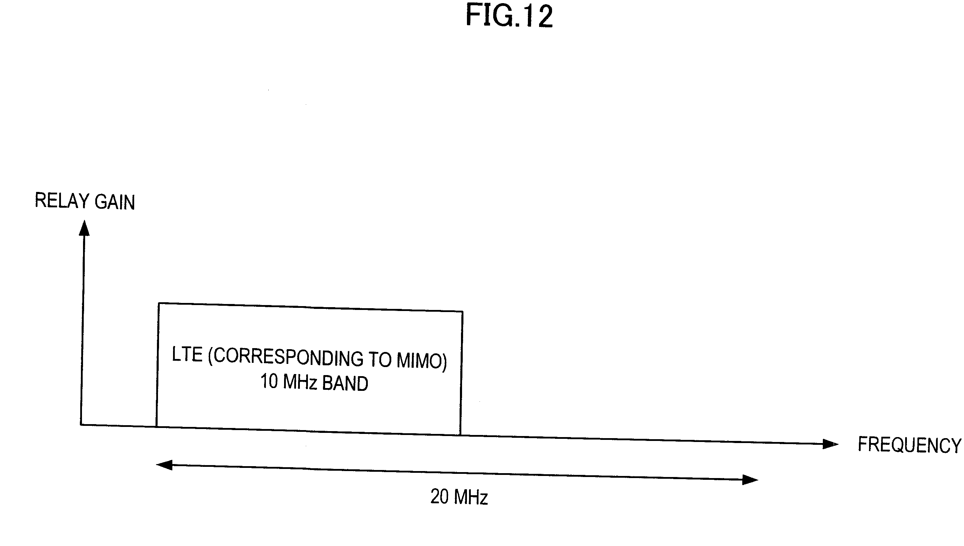

FIG. 12 illustrates an example of band selection by the second band selection part of the second relay system, and

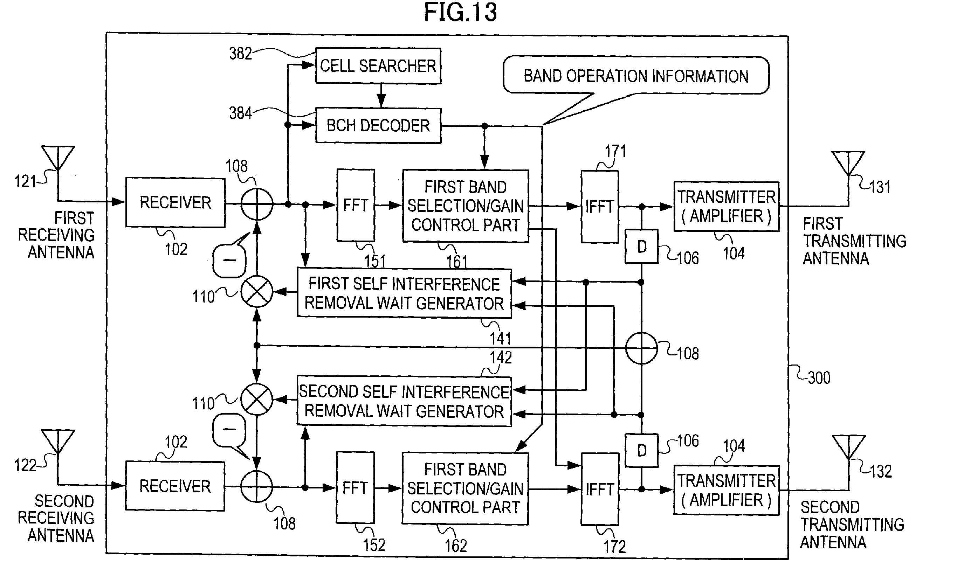

FIG.13 illustrates a third embodiment of a radio relay device.

With reference to the figures, description will be made of embodiments. Configurations of the embodiments are examples and are not limited to the configurations of the embodiments disclosed.

Description will be made of a radio relay device that receives a radio wave from a radio base station and transmits the radio wave to a terminal. The radio relay device may be used to receive the radio wave from the terminal and transmit the radio wave to the radio base station.

In this case, frequency bands where the radio relay device relays are assumed to be allocated as described in FIG.5. That is, a 10 MHz band is allocated to the LTE that performs MIMO transmission, and a 10 MHz band (5 MHz band x 2 carriers) is allocated to the 3G system that does not perform the MIMO transmission.
The allocation of the frequency bands in FIG. 5 is an example. The configurations described below may be used for allocation of the frequency bands that are different from that in FIG.5.

### First Embodiment

FIG.6 is a diagram illustrating a first embodiment of a radio relay device.

A radio relay device 100 includes a first receiving antenna 121, a second receiving antenna 122, receivers 102 that receives a signal from either the first receiving antenna 121 or the second receiving antenna 122, addition parts 108, and multiplication parts 110. The radio relay device 100 includes a first self interference removal wait generator 141, a second self interference removal wait generator 142, and delay parts 106. The radio relay device 100 includes a first transmitting antenna 131, a second transmitting antenna 132, and transmitters 104 that transmit a signal from either the first transmitting antenna 131 or the second transmitting antenna 132. The radio relay device 100 includes Fast Fourier Transfer (FFT) parts 151 and 152, a first band selection/gain control part 161, a second band selection/gain control part 162, and Inverse Fast Fourier Transfer (IFFT) parts 171 and 172.

Among the above-described processing parts, some parts may be used as one processing part. Any processing part of the above-described processing parts may perform a process as a plurality of processing parts. Each of the processing parts may be provided as hardware or software. The components described below also may be provided as hardware or software.

A first relay system includes the first receiving antenna 121, the receiver 102 that is connected to the first receiving antenna 121, the first self interference removal wait generator 141, the FFT part 151, the first band selection/gain control part 161, the IFFT part 171, the transmitter 104 that is connected to the first transmitting antenna 131, the first transmitting antenna 131, and components associated with these parts.

In the same manner, a second relay system includes the second receiving antenna 122, the receiver 102 that is connected to the second receiving antenna 122, the second self interference removal wait generator 142, the FFT part 152, the second band selection/gain control part 162, the IFFT part 172, the transmitter 104 that is connected to the second transmitting antenna 132, the second transmitting antenna 132, and components associated with these parts.

A signal obtained after the self interference subtraction from the receiver 102 output of the first relay system, and a signal that delayed the transmission signal of the first relay system in the delay part 106, and a signal that delayed the transmission signal of the second relay system are input to the first self interference removal wait generator 141. By using the adaptive algorithm, the first self interference removal wait generator 141 uses the input signals to calculate the self interference removal wait of the first relay system. By using another algorithm, the first self interference removal wait generator 141 may calculate the self interference removal wait of the first relay system. Furthermore, the first self interference removal wait generator 141 may improve the performance of the self interference removal by dividing into the band of the LTE and the band of the 3G system to calculate the optimum self interference removal wait.

The receiver 102 performs processes including, but not limited to, extracting of a required band by a filter, converting into a baseband signal by a downconverter, adjusting a signal level by Auto Gain Control (AGC), and converting into a digital signal by an Analog to Digital (A/D) converter.

In the multiplication part 110, the radio relay device 100 multiplies the self interference removal wait, generated by the first self interference removal wait generator 141, to the sum of the signal that delayed the transmission signal of the first relay system and the signal that delayed the transmission signal of the second relay system. In the addition part 108, the radio relay device 100 subtracts the multiplied result from the received signal of the first relay system (output from the receiver 102 connected to the first receiving antenna 121) in the addition part 108. The multiplication part 110 and the addition part 108 may be used as one part.

The FFT part 151 converts the result of the addition part 108 into a frequency domain from a time domain by Fast Fourier Transfer (FFT) and is then input to the first band selection/gain control part 161.

The first band selection/gain control part 161 selects a band of the LTE that performs the MIMO transmission and a band of the 3G system that does not perform the MIMO transmission as a band to relay. The first band selection/gain control part 161 may have a larger gain with respect to the band of the 3G system than the gain with respect to the band of the LTE. The first band selection/gain control part 161 inputs the signal to which the band selection and the gain adjustment are applied to the IFFT part 171.

The IFFT part 171 converts the signal that is input from the first band selection/gain control part 161 into a signal of the time band. The converted signal is a transmission signal of the first relay system.

The transmitter 104 converts the output of the IFFT part 171 into an analog signal, converts the analog signal into a Radio Frequency (RF) signal by an upconverter, amplifies the RF signal, and transmits the RF signal from the first transmitting antenna 131.

The second relay system of the radio relay device 100 is the same as the first relay system. However, the second band selection/gain control part 162 selects the band of LTE that performs the MIMO transmission as a band to relay, and does not select the band of the 3G system that does not perform the MIMO transmission. The second band selection/gain control part 162 sets zero to the relay gain of the band of the 3G system that does not perform the MIMO transmission. That is, the signal of the band of the 3G system that does not perform the MIMO transmission is relayed just in the first relay system.

The second self interference removal wait generator 142 is not required to calculate the optimum self interference removal wait with respect to the band of the 3G system. In the second relay system, the relay of the signal of the band of the 3G system is not performed. That is, the second self interference removal wait generator 142 calculates the optimum self interference wait with respect to the band of the LTE.

Here, the example of the radio relay device having two relay systems is an illustration. According to the same configuration, the radio relay device may have two or more relay systems. That is, the radio relay device 100 may include a plurality of configurations that are the same as in the second relay system.

Operation Examples

Description will be made of operation examples of the radio relay device 100. Description will be made of operations of band selection/gain adjustment performed by the radio relay device 100.

Each relay system converts the received signal into a signal of the frequency domain by the FFT. After performing the band selection and the gain adjustment, the relay system again converts the signal into a signal of the time domain by the IFFT, and then performs relay transmission.

FIG.7 is a diagram illustrating an example of the band selection/gain adjustment by a first band selection/gain control part of the first relay system.

The first band selection/gain control part 161 of the first relay system selects, as bands to relay, both the band of the LTE that performs the MIMO transmission and the band of the 3G system that does not perform the MIMO transmission. Furthermore, the first band selection/gain control part 161 of the first relay system may have a larger gain with respect to the band of the 3G system than the gain with respect to the band of the LTE. The second relay system does not select the band of the 3G system as a band to relay. Thus, in the first relay system, if the gain with respect to the band of the LTE is the same as the gain with respect to the 3G system, the gain with respect to the band of the 3G system is smaller than the gain with respect to the band of the LTE in the whole radio relay device. In the first relay system, the gain with respect to the band of the 3G system is larger than the gain with respect to the band of the LTE, so that the gain with respect to the band of the 3G system may be equal to the gain with respect to the band of the LTE in the whole radio relay device 100.

FIG.8 is a diagram illustrating an example of band selection/gain adjustment by a second band selection/gain control part of the second relay system.

The second band selection/gain control part 162 of the second relay system selects the band of the LTE that performs the MIMO transmission as a band to relay. The second band selection/gain control part 162 of the second relay system does not relay by setting 0 to the relay gain with respect to the band of the 3G system. The second band selection/gain control part 162 of the second relay system sets the same gain with respect to the band of the LTE as the gain with respect to the band of the LTE of the first band selection/gain control part 161.

According to an embodiment, it is possible that the MIMO relay is performed in the band of the LTE that performs the MIMO transmission, and the relay is performed in one relay system without performing the MIMO relay in the band of the 3G system that does not perform the MIMO transmission. According to an embodiment, the self interference of the signal of the 3G system is not generated from a plurality of antennas. Thus, complexity of transmission paths of the self interference by the signal of the 3G system may be reduced.

Second Embodiment

Description will be made of a second embodiment. The second embodiment and the first embodiments have similarities. Therefore, differences between the first embodiment and the second embodiment will be described.

FIG.9 is a diagram illustrating the second embodiment of the radio relay device.

A radio relay device 200 includes the first receiving antenna 121, the second receiving antenna 122, the receivers 102 that receives a signal from either the first receiving antenna 121 or the second receiving antenna 122, the addition parts 108, and the multiplication parts 110. The radio relay device 200 includes the first self interference removal wait generator 141, the second self interference removal wait generator 142, and the delay parts 106. The radio relay device 200 includes the first transmitting antenna 131, the second transmitting antenna 132, the transmitters 104 that transmit a signal from either the first transmitting antenna 131 or the second transmitting antenna 132. The radio relay device 200 includes the FFT parts 151 and 152, a first band selection part 261, a second band selection part 262, and the IFFT parts 171 and 172.

The first relay system includes the first receiving antenna 121, the receiver 102 that is connected to the first receiving antenna 121, the first self interference removal wait generator 141, the FFT part 151, the first band selection part 261, the IFFT part 171, the transmitter 104 that is connected to the first transmitting antenna 131, the first transmitting antenna 131, and components associated with these parts.

In the same manner, the second relay system includes the second receiving antenna 122, the receiver 102 that is connected to the second receiving antenna 122, the second self interference removal wait generator 142, the FFT part 152, the second band selection part 262, the IFFT part 172, the transmitter 104 that is connected to the second transmitting antenna 132, the second transmitting antenna 132, and components associated with those parts.

The FFT part 151 converts the result of the additional part 108, by the Fast Fourier Transfer (FFT), from a time domain into a frequency domain, and then inputs the frequency domain to the first band selection part 261.

The first band selection part 261 selects, as a band to relay, the band of the LTE that performs the MIMO transmission and the band of the 3G system that does not perform the MIMO transmission. The first band selection part 261 inputs the signal for the band selection to the IFFT part 171. The first band selection part 261 inputs a signal of the band of the 3G system that does not perform the MIMO transmission to the IFFT part 172 of the second relay system.

The second band selection part 262 selects the band of the LTE that performs the MIMO transmission as a band to relay. The second band selection part 262 inputs the signal for the band selection to the IFFT part 172.

The IFFT part 172 combines the signal, input from the second band selection part 262, of the band of the LTE that performs the MIMO transmission and the signal, input from the first band selection part 262, of the band of the 3G system that does not perform the MIMO transmission, and then converts the signal into a signal of the time domain. The converted signal is a transmission signal of the second relay system.

The second self interference removal wait generator 142 is not required to calculate the optimum self interference removal wait with respect to the band of the 3G system. The second relay system does not perform the relay with respect to the signal of the band of the 3G system received by the receiver 102 of the second relay system.

Here, the relay system having two radio relay devices is described as an example. According to the same configuration, the radio relay device may have two or more relay systems. That is, the radio relay device 200 includes the same configurations as those of the second relay system.

<Operation Examples>

Description will be made of operation examples of the radio relay device 200. Description will be made of operations of the band selection/gain adjustment by the radio relay device 200.

In the configuration of the first embodiment, deviation of the relay gain is generated in the first relay system and the second relay system because the signal of the band of the 3G system is relayed just by the first relay system. For example, an amplifier of the first relay system may be larger than the amplifier of the second relay system.

FIG.10 is a diagram illustrating an example of band selection by the first selection part of the first relay system.

FIG.11 is a diagram illustrating an example of the band input from the first band selection part of the first relay system to the IFFT part of the second relay system.

The first band selection part 261 of the first relay system selects, as a band to relay, both the band of the LTE that performs the MIMO transmission and the band of the 3G system that does not perform the MIMO transmission. The first band selection part 261 inputs the signal for the band selection to the IFFT part 171. The IFFT part 171 converts the input signal of the band of the LTE that performs the MIMO transmission and the signal of the band of the 3G system that does not perform the MIMO transmission into a signal of the time domain. The first band selection part 261 inputs the signal of the band of the 3G system that does not perform the MIMO transmission to the IFFT part 172 of the second relay system. This is because the signal of the band of the 3G system that does not perform the MIMO transmission is also relayed by the second relay system.

FIG. 12 is a diagram illustrating an example of band selection by the second band selection part of the second relay system.

The second band selection part 262 of the second relay system selects the band of the LTE that performs the MIMO transmission as a band to relay.
Furthermore, the second band selection part 262 of the second relay system does not select the band with respect to the 3G system as a band to relay. The second band selection part 262 inputs the signal for the band selection to the IFFT part 172. The IFFT part 172 converts the input signal of the band of the LTE that performs the MIMO transmission and the input signal of the band of the 3G system that does not perform the MIMO transmission into a signal of the time domain.

According to the present embodiment, each relay system may relay a signal of the band of the LTE that performs the MIMO transmission and a signal of the band of the 3G system that does not perform the MIMO transmission. According to the present embodiment, it is possible to prevent imbalance of the relay gain between the relay systems. A signal of the band of the 3G system to be relayed is a signal received by a single relay system. Therefore, a communication path of the self interference becomes simpler than in a case where the signal of the band of the 3G system received from a plurality of relay systems is relayed individually. Accordingly, the radio relay device may reduce the influence of the self interference when the signal of the band of the 3G system is relayed.

### Third Embodiment

Description will be made of a third embodiment. The third embodiment, the first embodiment, and the second embodiment have the similarities. Therefore, differences among the first embodiment, the second embodiment, and the third embodiment will be mainly described.

FIG.13 is a diagram illustrating the third embodiment of the radio relay device.

A radio relay device 300 includes the first receiving antenna 121, the second receiving antenna 122, the receiver 102 that receives a signal from either the first receiving antenna 121 or the second receiving antenna 122, the additional parts 108, and the multiplication parts 110. The radio relay device 300 includes the first self interference removal wait generator 141, the second self interference removal wait generator 142, and the delay parts 106. The radio relay device 300 further includes the first transmitting antenna 131, the second transmitting antenna 132, and the transmitter 104 that transmits a signal from either the first transmitting antenna 131 or the second transmitting antenna 132. The radio relay device 300 includes the FFT parts 151 and 152, the first band selection/gain control part 161, the second band selection/gain control part 162, and the IFFT parts 171 and 172. The radio relay device 300 includes a cell searcher 382, and a Broadcast Channel (BCH) decoder 384.

The radio relay device 300 includes a cell searcher 382 and a BCH decoder 384, so that the radio relay device 300 is able to control the band selection/gain controller of each relay system according to information of as a notification channel or the like.

The cell searcher 382 may conduct initial synchronization to a radio base station. The cell searcher 382 may detect a timing of a sub frame by a correlation operation of a synchronization channel included in the received signal. Furthermore, the cell searcher 382 may recognize the timing and the number of the radio frame by correlation with a pilot channel.

The BCH decoder 384 may decode a BCH that is multiplexed with the received signal and obtain information of the notification channel according to the timing obtained by the cell search. The BCH decoder 384 instructs to change a relay method of each band in the band selection/gain control part of each relay system based on system band operation information included the notification channel. The system band operation information includes a communication band that corresponds to the MIMO and the information of the communication band that does not correspond to the MIMO. Specifically, as for the communication band the BCH decoder 384 controls each band selection/gain control part to perform the relay from all the relay systems. With respect to the communication band that does not correspond to the MIMO, the BCH decoder 384 controls each band selection/gain control part to perform the relay just from one relay system (as described in the first embodiment), or to perform the relay after copying the relay signal (received signal) of a signal relay system to another relay system (as described in the second embodiment).

That is, the BCH decoder 384 may report the system band operation information to each band selection/gain control part. Each band selection/gain control part may perform band selection/gain adjustment based on the system band operation information.

Here, description was made of a radio relay device having two relay systems. According to the same configuration, the radio relay device may have two or more relay systems. That is, the radio relay device 300 may include the similar configurations.

The radio relay device of the present embodiment generates no unwanted self interferences. Therefore, the radio relay device of the present embodiment may reduce deterioration of the relay performance by interference of the self interference. As a result, it becomes possible to ease the installation condition of the radio relay device and to improve the relay gain of the radio relay device. According to the present embodiment, it is possible to reduce burden of maintenance of the radio relay device by changing the relay method (number of relay systems) flexibly and automatically according to an operation mode of the system.

According to the disclosed form, it is possible to reduce the influence of the self interference in the radio relay device that relays a radio signal of a plurality of communication methods.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention(s) has(have) been described in detail, it should be understood that the various changes, substitutions, and alterations could be made hereto without departing from the scope of the invention.

## Claims

1. A radio relay device which relays and transmits a received radio signal, comprising:
a first receiving part which receives the radio signal through a first antenna;
a first gain control part which controls gain of a first received signal which is received by the first receiving part;
a first transmitting part which transmits a first relay signal which is obtained by amplifying an output signal of the first gain control part;
a second receiving part which receives the radio signal through a second antenna;
a second gain control part which controls gain of a second received signal which is received by the second receiving part,
a second transmitting part which transmits a second relay signal which is obtained by amplifying an output signal of the second gain control part;
a first generating part which generates, based on the output signals of the first and second gain control parts and on the signal which is input to the first gain control part;
a first wait which is used to remove a self interference from the first received signal;
a first self interference removing part which removes the self interference from the first received signal based on the first wait;
a second generating part which generates, based on the output signals of the first and second gain control parts and on the signal which is input to the second gain control part;
a second wait which is used to remove the self interference from the second received signal; and
a second self interference removing part which removes the self interference from the second received signal based on the second wait.

2. The radio relay deice according to claim 1, wherein the first wait is calculated as a rate of a case where signal power of the output signal of the first self interference removing part is minimized, and
wherein the second wait is calculated as a rate of a case where the signal power of the output signal of the second self interference removing part is minimized.

3. The radio relay device according to claim 1 or 2, wherein the first self interference removing part removes a signal which is obtained by multiplying the first wait by a total of the output signals of first and second gain control parts from the first received signal, and
wherein the second self interference removing part removes a signal which is obtained by multiplying the second wait by a total of the output signals of the first and second gain control parts from the second received signal.

4. The radio relay device according to claim 1, 2 or 3, wherein the first gain control part controls, with respect to the output signal of the first self interference removing part, in such a way that gain with respect to a band of a first communication method is larger than the gain with respect to the band of a second communication method, and
wherein the second gain control part controls the gain in such a way that, among the output signals of the second self interference removing part, the gain with respect to the band of the first communication method is zero, and that the gain with respect to the band of the second communication method is equal to the band of the second communication method which is controlled by the first gain control part.

5. The radio relay device according to claim 1, 2 or 3, wherein the first gain control part controls, with respect to the output signal of the first self interference removing part, in such a way that the gain with respect to the band of the first communication method is equal to the band with respect to the band of the second communication method, and
wherein the second gain control part controls the gain in such a way that, among the output signals of the second self interference removing part, the gain with respect to the band of the first communication method is zero, and that the gain with respect to the band of the second communication method is equal to the band of the second communication method which is controlled by the first gain control part.

6. The radio relay device according to claim 5, wherein the first communication method is a non multi-input/multi-output communication method, and the second communication method is a multi-input/multi-output communication method.

7. The radio relay device according to any preceding claim, wherein the radio relay device further comprises an allocation information receiving part which receives allocation information, transmitted by another radio device, of the band of the first communication method and the band of the second communication method, and reports the allocation information to the first gain control part and the second gain control part, and
wherein the first gain control part and the second gain control part control the gain based on the allocation information.

8. A radio relay device which relays and transmits a received radio signal, comprising:
a first receiving part which receives the radio signal through a first antenna;
a first band selection part which selects both a band of a first communication method and the band of a second communication method as a band of a first received signal received by the first receiving part;
a first transmitting part which transmits a first relay signal which is obtained by amplifying an output signal of the band selected by the first band selection part;
a second receiving part which receives the radio signal through a second antenna;
a second band selection part which selects the band of the first communication method as a band of a second received signal received by the second receiving part;
a second transmitting part which transmits an output signal of the band of the second communication method among the bands selected by the first band selection part and a second relay signal obtained by amplifying the output signal;
a first generating part which generates a first wait used to remove a self interference from the first received signal which includes the first relay signal and the second relay signal as a sneak wave based on the output signal of the first band selection part and the second band selection part and a signal to be input to the first band selection part;
a first self interference removing part which removes the self interference from the first received signal based on the first wait;
a second generating part which generates a second wait used to subtract the sneak wave from the second received signal which includes the sneak wave based on the output signal of the first band selection part and the second band selection part and a signal to be input to the second band selection part; and
a second self interference removing part which removes the self interference removing from the second received signal based on the second wait.

9. The radio relay device according to claim 8, wherein the first communication method is a non multi-input/multi-output communication method, and the second communication method is a multi-input/multi-output communication method.

10. A radio relay method for relaying and transmitting a received radio signal, comprising:
receiving the radio signal as a first received signal through a first antenna;
outputting a first gain controlled signal which controls gain of the first received signal;
transmitting a first relay signal which is obtained by amplifying the first gain controlled signal;
receiving the radio signal as a second received signal through a second antenna;
outputting a second gain controlled signal which controls gain of the second received signal;
transmitting a second relay signal which is obtained by amplifying the second gain controlled signal;
generating a first wait which is used to remove the self interference from the first received signal based on the first and second gain controlled signals and the first input signal used to control the gain;
removing the self interference from the first received signal based on the first wait;
generating a second wait which is used to remove the self interference from the second received signal based on the first and second gain controlled signals and the second input signal used to control the gain; and
removing the self interference from the second received signal based on the second wait.

11. The radio relay method according to claim 10, wherein the first gain controlled signal controls gain, with respect to the first signal which removes the self interference, in such a way that the gain with respect to the band of the first communication method is larger than the gain with respect to the band of the second communication method, and
wherein the second gain controlled signal controls the gain in such a way that, among the second signals from which the self interference is removed, the gain with respect to the band of the first communication method is zero, and that the gain with respect to the band of the second communication method is equal to the band of the second communication method which is controlled by the first gain controlled signal.

12. The radio relay method according to claim 10, wherein the first gain controlled signal controls gain, with respect to the first signal which removes the self interference, in such a way that the gain with respect to the band of the first communication method is equal to the gain with respect to the band of the second communication method, and
wherein the second gain controlled signal controls the gain in such a way that, among the second signals from which the self interference is removed, the gain with respect to the band of the first communication method is zero, and that the gain with respect to the band of the second communication method is equal to the band of the second communication method which is controlled by the first gain control signal.
